# EUROPEAN PATENT SPECIFICATION

(11) **EP 4 461 995 B1**
(45) Date of publication and mention of the grant of the patent: **25.02.2026**
(21) Application number: 23172693.6
(22) Date of filing: 11.05.2023
(51) Int. Cl.: F16H 57/04, B60K 17/28

(54) **POWER TAKE-OFF, POWERTRAIN AND VEHICLE**
ZAPFWELLE, ANTRIEBSSTRANG UND FAHRZEUG
PRISE DE FORCE, GROUPE MOTOPROPULSEUR ET VÉHICULE

(43) Date of publication of application: 13.11.2024
(73) Proprietor: Traton AB, 151 87 Södertälje (SE)
(72) Inventor: PETERSEN, Daniel, 647 50 Åkers styckebruk (SE); ÅSLUND, Johan, 178 32 Ekerö (SE)
(74) Representative: Scania CV AB

(56) References cited:
- US-A- 5 228 355
- US-A1- 2013 133 454
- US-A1- 2021 252 975
- US-B2- 7 878 304
- US-B2- 8 115 334

## Description

### TECHNICAL FIELD

The present disclosure relates to a power take-off (PTO) of a powertrain of a vehicle. The present disclosure further relates to a powertrain of a vehicle comprising a PTO and to a vehicle comprising a powertrain with a PTO.

### BACKGROUND

A power take-off (PTO) is one of several methods for transferring power from a power source, such as an engine.

Purely electric vehicles typically use stored electrical energy to power an electric motor, which propels the vehicle. Hybrid electric vehicles combine an internal combustion engine and an electric motor that is typically powered by one or more electrical energy storage devices. Such a combination may increase overall fuel efficiency by enabling the combustion engine and the electric motor to each operate in respective ranges of increased efficiency. It may be more efficient to use electric motors during startup, and use combustion engines primarily during sustained periods of constant engine operation. For example, a hybrid vehicle, having an electric motor to boost initial acceleration, permits the use of a smaller and more fuel-efficient combustion engine.

Today mechanical PTO's are mostly used for transfer of power from an internal combustion engine (ICE). For battery electric vehicles (BEV), such as BEV-trucks, a separated electric machine is often required.

Therefore, it has been desirable to provide a PTO for transfer of power from an electric motor.

US2021252975A1 describes a system including an electric motor having an output coupled to a power take-off (PTO) stub shaft for coupling to an agricultural accessory.

US8115334B2 describes a power take-off (PTO) system comprising an energy storage device configured to supply electrical power, an electrical drive system and PTO-shaft connected to the electrical drive system.

US7878304B2 describes a gearbox arrangement comprising gearbox sections and a power take-off assembly. A guide optimizes a feeding effect of a ring gear comprised in a gearbox section.

The cited documents describe systems comprising PTO. However, by applying their detailed knowledge of PTO, the inventors have identified and realized new improvement areas of the PTO-technology, not presently known. The improvement areas relate, inter alia, to cooling and lubrication of a PTO.

### SUMMARY

It is an object of the present invention to provide an improved power take-off (PTO), an improved powertrain and an improved vehicle with improvements related to the areas as mentioned above.

According to a first aspect of the invention, the object is achieved by a power take-off (PTO) of a powertrain of a vehicle. The PTO comprises a housing and a number of gear wheels rotatably arranged inside the housing for transfer of power between an input shaft connected to a power source of the powertrain and at least one output shaft. The housing comprises a main oil inlet arranged for providing oil into the housing for cooling and lubrication of the number of gear wheels. Further, the housing comprises at least one oil outlet having an inlet and being configured for removing the oil from the housing, wherein the oil is transported towards the at least one oil outlet by at least one of the number of gear wheels during rotation of the number of gear wheels.

The main oil inlet comprises a through opening in the housing enabling the oil to be provided into the housing. The main oil inlet forms an inlet channel for the oil to be provided into the housing through the main oil inlet. Preferably the main oil inlet is connected to an oil system configured to provide the oil to the main oil inlet and further into the housing. The oil is developed and adapted for the purpose of cooling and lubrication of the number of gear wheels. Thus, the number of gear wheels may be cooled and lubricated by the oil provided into the housing through the main oil inlet. Further, the oil outlet comprises a further through opening in the housing comprised in the oil outlet to enable the oil to be removed from the housing. The oil outlet forms an outlet channel for the oil to be removed from the housing through the oil outlet. Preferably the oil outlet is connected to the oil system where the oil may be collected after being used in the housing and may be reused by being provided to the main oil inlet and again into the housing. The oil system may be a closed loop oil system and may comprise an oil filter configured to filter the oil and a pump to pump the oil.

The oil outlet comprises an inlet through which the oil is transported into the oil outlet and further out from the housing. The inlet to the oil outlet may be defined as an area where the oil outlet just starts seen in a direction from the inside of the housing towards the outside of the housing. Thus, the inlet to the oil outlet is formed by an outermost edge of the oil outlet inside the housing.

Because the oil is transported towards the at least one oil outlet by at least one of the number of gear wheels during rotation of the number of gear wheels no additional means for transporting the oil toward the oil outlet are needed. Thus, the oil is transported to an area around the inlet to the oil outlet by at least one of the number of gear wheels.

Oil provided into the housing reaches at least one of the number of gear wheels and is distributed to the remaining gear wheels during rotation of the number of gear wheels by the fact that the number of gear wheels have contact with each other. The rotational movement of the gear wheels generate centrifugal forces acting on the oil in a radial direction from a center of each of the number of gear wheels out from the gear wheels. During rotation of the gear wheels with a certain rotational speed centrifugal forces may cause at least a portion of the oil to leave the surfaces of the gear wheels. Thus, the oil is forced to move in a rotational direction by gears of respective gear wheel of the number of gear wheels and may be forced to move in the radial direction by the centrifugal forces created during rotation of the gear wheels. In some positions of the gears of the gear wheels also gravity contributes to transport of the oil towards the oil outlet.

As an effect, oil inside the housing is distributed between the number of gear wheels to the surfaces of the number of gear wheels. As a result, cooling and lubrication of the number of gear wheels is achieved.

Furthermore, the oil may be distributed around the housing because of the centrifugal forces forcing the oil to move in the radial direction from the respective gear wheel towards an inner surface of the housing. A portion of the oil may be forced to reach the inner surface of the housing and by gravity to drop down or to move down along the inner surface of the housing.

Consequently, the oil is transported towards the oil outlet as an effect of several forces such as centrifugal forces and gravity action on the oil during rotation of the number of gear wheels. Further, the oil may be transported towards the oil outlet by moving along the inner surface of the housing towards the inlet to the oil outlet, which is caused by gravity.

According to the present invention, the housing comprises at least one oil guiding element arranged inside the housing at the at least one oil outlet for guiding the oil transported towards the at least one oil outlet into the at least one oil outlet for removing the oil from the housing. The at least one oil guiding element (11, 11') comprises a second portion (13, 13') extending inside the at least one oil outlet (9, 9') a second distance (d2, d2') from said inlet (6, 6')

The oil guiding element forms an obstacle for oil inside the housing being transported to the at least one oil outlet. Each of the at least one oil guiding element is configured such that oil meets the oil guiding element and is guided by the oil guiding element into respective oil outlet for being removed from the housing. The oil moves along a surface of the oil guiding element in a direction from the interior of the housing into the oil outlet and further out from the housing. Continuously transported oil creates an oil flow along the oil guiding element in a direction out from the housing.

According to some embodiments the oil guiding element may be angled in relation to a horizontal direction such that the oil guiding element is arranged tilting slightly downwards in a direction from the interion of the housing toward the oil outlet. As a result, removing of the oil from the housing may be improved.

Thus, the at least oil guiding element facilitates removal of the oil from the housing and contributes to an improved flow of oil out from the housing. Improved removal of oil from the housing implies that new and fresh oil may be provided to the housing to replace the removed oil. Thus, the flow of oil into the housing and out from the housing is improved comparing to a case without an oil guiding element. Improved flow of oil results in an improved cooling and lubrication of the number of gear wheels.

Accordingly, a PTO is provided having conditions for improved cooling and lubrication of the number of gear wheels. Thus, a PTO is provided overcoming, or at least alleviating, at least some of the above-mentioned problems and drawbacks. As a result, the above-mentioned object is achieved.

Optionally, the at least one oil guiding element comprises a first portion extending inside the housing a first distance from the inlet of the at least one oil outlet. The first portion extending inside the housing the first distance forms a catching part for oil transported towards the at least one oil outlet. As a result, removing of oil from the housing is further improved because oil may be caught by the first portion for further transport into the at least one oil outlet and out from the housing.

According to the invention, the at least one oil guiding element comprises a second portion extending inside the at least one oil outlet a second distance from the inlet. As a result, oil caught by the oil guiding element may be guided into the at least one oil outlet along the second portion of the oil guiding element. Thus, an improved control of the oil flow into the at least one oil outlet is achieved. Accordingly, removing of oil from the housing is yet improved because of an improved control of the oil flow into the at least one oil outlet.

Optionally, the at least one oil guiding element comprises a third portion extending from the first portion and being configured to guide the oil towards the first portion of the oil guiding element. The third portion extends from the first portion such that an angle is formed between the first portion and the third portion. Preferably the angle is around 90 degrees. Preferably the third portion extends from an outer edge of the first portion inside the housing. As a result, oil transported towards the at least oil outlet may be caught in a yet improved manner. The oil may be caught by the third portion at a first stage and then may be guided towards the first portion and further into the at least one oil outlet. A backflow of oil along the first portion in a direction towards the inside of the housing may be prevented by the third portion. Accordingly, the oil transported towards the at least one oil outlet may be guided into the at least one oil outlet in a yet improved manner. As a result, removing of the oil from the housing is yet improved.

Optionally, the third portion is arranged as a mirrored portion in relation to a plane extending through the oil guiding element. Thus, a yet improved oil guiding element is provided having conditions for improved guiding of oil out from the housing during rotation of the gear wheels in both rotational directions.

Optionally, the third portion has a concave outer surface facing the at least one oil outlet. The concave outer surface of the third portion improves guiding of the oil towards the first portion of the oil guiding element because of a smooth path of the oil flow along the concave outer surface. Thus, risks for turbulences in the oil flow when guided by the guiding element is at least reduced.

Optionally, the at least one oil outlet has a center and the at least one oil guiding element is arranged at the center of the least one oil outlet. This position may be advantageous regarding guiding of oil out from the housing during rotation of the gear wheels in both rotational directions.

Optionally, the at least one oil guiding element is configured as a one-piece element. Thus, the oil guiding element may be manufactured as a one-piece oil guiding element including all the portions of the oil guiding element, such as the first-, the second- and the third portion of the oil guiding element. Thereby, a robust oil guiding element is provided. Further, for an oil guiding element comprising the first-, the second- and the third portion of the oil guiding element assembling of the portions of the oil guiding element is not needed.

Optionally, the at least one oil guiding element is integrated into the housing as an integrated part of the housing or the least one oil guiding element is connected to the housing by a connection element. The housing may be manufactured with at least one oil guiding element included in the housing as a one part by, for example, a molding process using a form. Thus, a one-piece housing with the at least one oil guiding element may be achieved. As a result, no attachment of the at least one oil guiding element to the housing is needed. As an alternative, the at least one oil guiding element may be connected to the housing by means of, for example, a screw assembly.

Optionally, the at least one oil guiding element is arranged to guide the oil into the at least one oil outlet at both rotational directions of the number of gear wheels. Thus, an improved PTO is provided having conditions for guiding of the oil into the at least one oil outlet and further out from the housing in an efficient manner at both rotational directions of the number of gear wheels.

Optionally, the at least one oil guiding element is arranged at one gear wheel of the number of gear wheels such that the first distance is shorter than a gear wheel distance measured between the inlet and an outermost tip of a tooth of the gear wheel. Thus, the at least one oil guiding element is positioned in relation to the one gear wheel such that oil transported by the one gear wheel is effectively caught by the at least one oil guiding element.

Optionally, the at least one oil guiding element is arranged in relation to the at least one oil outlet and one gear wheel of the number of gear wheels such that there is a virtual straight line through a center of the gear wheel and the at least one oil guiding element and the center of the at least one oil outlet. Thus, the at least one oil guiding element may be positioned in relation to the one gear wheel such that oil transported by the one gear wheel is caught by the at least one oil guiding element in a yet improved manner.

According to a second aspect of the invention, the object is achieved by a powertrain of a vehicle comprising a PTO according to any of the embodiments described herein. Since the powertrain comprises an improved PTO according to some embodiments, a powertrain is provided overcoming, or at least alleviating, at least some of the above-mentioned problems and drawbacks. As a result, the above-mentioned object is achieved.

Optionally, the powertrain comprises an electric propulsion unit comprising an electric machine having a rotor shaft connected to the input shaft of the PTO. Thus, an improved power train is provided that can be used in an electric vehicle.

According to a third aspect of the invention, the object is achieved by a vehicle comprising a powertrain according to any of the embodiments described herein. Since the vehicle comprises an improved powertrain according to some embodiments, a vehicle is provided overcoming, or at least alleviating, at least some of the above-mentioned problems and drawbacks. As a result, the above-mentioned object is achieved.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 schematically illustrates a cross section of a power take-off PTO 1 according to some embodiments,
Fig. 2 schematically illustrates a cross section of a part of a PTO according to some further embodiments and
Fig. 3 schematically illustrates a vehicle comprising a PTO according to some embodiments.

### DETAILED DESCRIPTION

Aspects of the present invention will now be described more fully. Like numbers refer to like elements throughout. Well-known functions or constructions will not necessarily be described in detail for brevity and/or clarity.

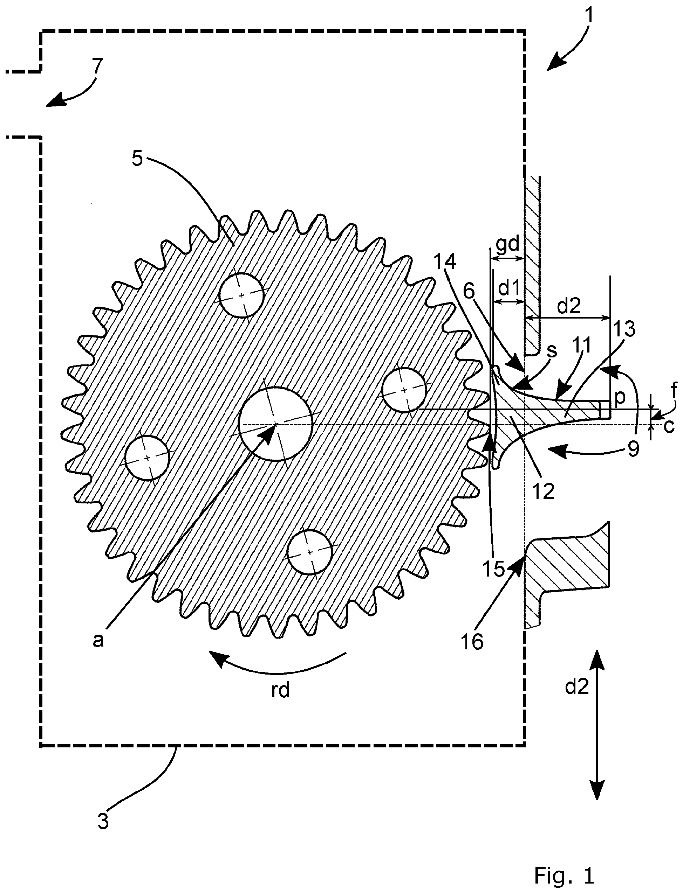

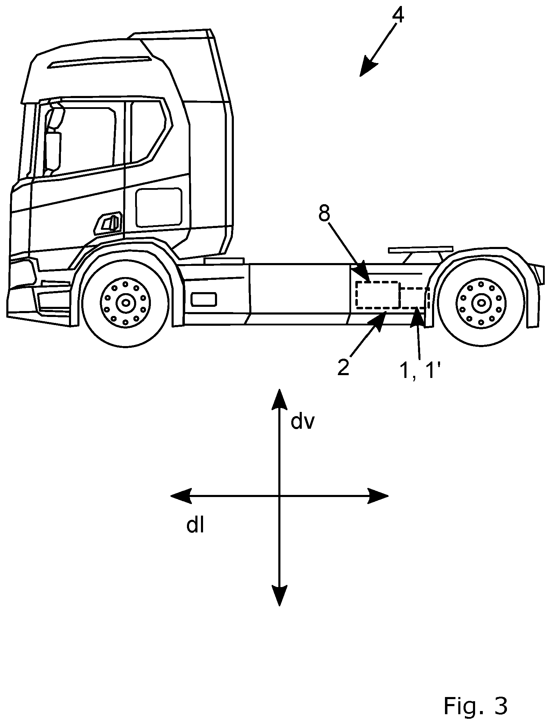

**Fig. 1** schematically illustrates a cross section of a power take-off PTO 1 according to some embodiments. The PTO 1 is configured to be a part of a powertrain 2 with a power source 8 of a vehicle 4 illustrated in Fig. 3. The PTO 1 comprises a housing 3 and a number of gear wheels 5 rotatably arranged inside the housing 3 for transfer of power between an input shaft (not shown) connected to the power source 8 of the powertrain 2 and at least one output shaft (not shown). In Fig. 1 only one gear wheel 5 is illustrated for the purpose of explanation of the function of the invention, particularly for the explanation of the function of an oil guiding element 11. However, in reality the PTO comprises several gear wheels 5 arranged for transfer of power which is not illustrated and described as being common knowledge within the area of PTO.

The housing 3 comprises a main oil inlet 7 arranged for providing oil into the housing 3 for cooling and lubrication of said number of gear wheels 5, and at least one oil outlet 9 having an oil inlet 6 and being configured for removing the oil from the housing 3. According to the illustrated embodiments the housing 3 comprises one oil outlet 9. However, the housing 3 may comprise several oil outlets 9 arranged at different positions in the housing 3.

The housing 3 is illustrated in a schematical manner. The housing 3 may have different design with different positions of the parts of the housing 3, such as the main inlet 7 the oil outlet 9 and depending on the operational requirements and the requirements from a client.

Preferably the main oil inlet 7 is connected to an oil system (not shown) comprising pipes, an oil filter and an oil pump and being configured to provide the oil to the main oil inlet 7 and further into the housing 3. Further, the oil system may comprise a cooling device for cooling of the oil.

In the PTO 1 oil provided to the housing 3 is transported towards the at least one oil outlet 9 by the gear wheels 5 during rotation of the gear wheels 5. Oil provided to the housing 3 is transported towards the oil outlet 9 by the gears of the gear wheels 5. Further, oil is transported towards the oil outlet 9 as an effect of several forces acting on the oil, such as centrifugal forces and gravity during rotation of the number of gear wheels 5. Yet further, oil may be transported towards the oil outlet 9 by moving along the inner surface of the housing 3 towards the inlet 6 to the oil outlet 9, which is caused by gravity.

According to the embodiments illustrated in Fig. 1, the housing 3 comprises at least one oil guiding element 11 arranged inside the housing 3 at the at least one oil outlet 9 for guiding the oil transported towards the at least one oil outlet 9 for removing the oil from the housing 3.

According to the embodiments illustrated in Fig. 1, one oil guiding element 11 is illustrated and one oil outlet 9. The oil guiding element 11 is arranged radially in relation to the gear wheel 5.

According to some embodiments where the housing 3 comprises several oil outlets 9 several oil guiding elements 11 may be arranged, such that at least one oil guiding element 11 is arranged at respective oil outlet 9.

Preferably, the oil outlet 9 is connected to the oil system (not shown but described above) configured to collect used oil transported out from the housing 3 and arranged to provide the oil to the main oil inlet 7 and further into the housing 3. According to some embodiments the oil system may generate suction forces to the oil outlet 9 that may help to remove the oil from the housing 3.

As illustrated in Fig. 1, the oil guiding element 11 comprises a first portion 12 extending inside the housing 3 a first distance d1 from the inlet 6. Further, the oil guiding element 11 comprises a second portion 13 extending inside the at least one oil outlet 9 a second distance d2 from the inlet 6. The oil guiding element 11 also comprises a third portion 14 extending from the first portion 12 and being configured to guide the oil towards the first portion 12 of the oil guide element 11 along the outer surface of the third portion 14.

According to some embodiments, the first distance d1 may be around 1-3 cm and the second distance d2 may be around 3-5 cm.

As illustrated in Fig. 1, the third portion 14 may be arranged as a mirrored portion in relation to a plane p extending through the oil guiding element 11. The plane p is a plane along an extension of the oil guiding element I a direction from the interior of the housing 3 towards the exterior of the housing 3 through the oil outlet 9.

According to the illustrated embodiments, the third portion 14 has a concave outer surface s facing the at least one oil outlet 9.

The oil guiding element 11 illustrated in Fig. 1 may guide the oil in both rotational directions of the gear wheel 5. According to some embodiments, the oil guiding element 11 may comprise two sub oil guiding elements separated from each other. The two sub oil guiding elements are then preferably separated from each other along the plane p. Thus, a first sub oil guiding element of the two sub oil guiding elements may be configured to guide the oil during rotation of the gear wheel 5 in a first rotational direction and a second sub oil guiding element of the two sub oil guiding elements may be then configured to guide the oil during rotation of the gear wheel 5 in a second rotational direction being opposite direction to the first rotational direction.

The oil outlet 9 has a center c, which is illustrated with a dashed line. The oil guiding element 11 may be arranged at the center s of the oil outlet 9.

According to the embodiments illustrated in Fig. 1, the gear wheel 5 is arranged to rotate in a rotational direction rd around a rotational axis a of the gear wheel 5. The rotational direction rd may be clockwise direction. According to some embodiments, the rotational direction may be counterclockwise direction.

According to some embodiments the oil guiding element 11 is positioned a distance from the center c of the oil outlet 9. The distance may be measured between the center line c and a plane p through the extension of the oil guiding element 11. Preferably, the oil guiding element 11 is positioned in a position from the center c in relation to the rotational direction rd towards upcoming gears of the gear wheel 5. Thus, in the perspective of Fig. 1 the oil guiding element 11 is arranged above the center line c. The center line may be parallel to a horizontal direction. Thus, the oil guiding element 11 may be arranged horizontally above the center line c.

Preferably, the at least one oil guiding element 11 is configured as a one-piece element. Thus, the oil guiding element 11 may be manufactured as a one-piece oil guiding element 11 including all the portions of the oil guiding element 11, such as the first-, the second- and the third portion 12, 13, 14 of the oil guiding element 11. Thereby, a robust oil guiding element 11 is provided. Further, assembling of the first-, the second- and the third portion 12, 13, 14 of the oil guiding element is not needed.

According to the embodiments illustrated in Fig. 1 the oil guiding element 11 is integrated into the housing 3 as an integrated part of the housing 3. However, the oil guiding element 11 may be connected to the housing 3 by means of, for example, a screw assembly. The oil guiding element 11 may be manufactured of the same material as the housing 3, such as for example metal, or material used for the housing 3 may be different than material used for the oil guiding element 11.

The oil guiding element 11 according to the embodiments illustrated in Fig. 1 may guide the oil into the oil outlet 9 at both rotational directions of the number of gear wheels 5.

Further, the oil guiding element 11 is arranged at the gear wheel 5 such that first distance d1 is shorter than a gear wheel distance gd measured between the inlet 6 and an outermost tip 15 of a tooth of the gear wheel 5. Preferably, the first distance d1 is in a range of about 50% to 95% of the gear wheel distance gd. As a result, the gear wheel 5 may freely rotate and the oil guiding element 11 is positioned in relation to the gear wheel 5 to catch the oil transported towards the oil outlet 9 and to guide the oil into the oil outlet 9 to remove the oil from the housing 3 in an efficient manner.

Further, the oil guiding element 11 may be arranged in relation to the oil outlet 9 and the gear wheel 5 such that there is a virtual straight line through a center of the gear wheel 5 and the oil guiding element 11 and the center c of the oil outlet 9.

The oil outlet 9 comprises an inlet 6 through which the oil is transported into the oil outlet 9 and further out from the housing 3. The inlet 6 to the oil outlet 9 may be defined as an area where the oil outlet 9 just starts seen in a direction from the inside of the housing 3 towards the outside of the housing 3. Thus, the inlet 6 to the oil outlet 9 is formed by an outermost edge 16 of the oil outlet 9 inside the housing 3. Preferably, the inlet 6 has an outer contour in the form of a circle. The inlet 6 is illustrated with a dashed line in Fig. 1. Further, the inlet 6 may be defined as a portion of a plane extending through an inner surface of the housing 3 and through a portion of the outlet 9. Thus, the first distance d1 and the gear wheel distance gd may be measured from this portion of the plane forming said inlet 6.

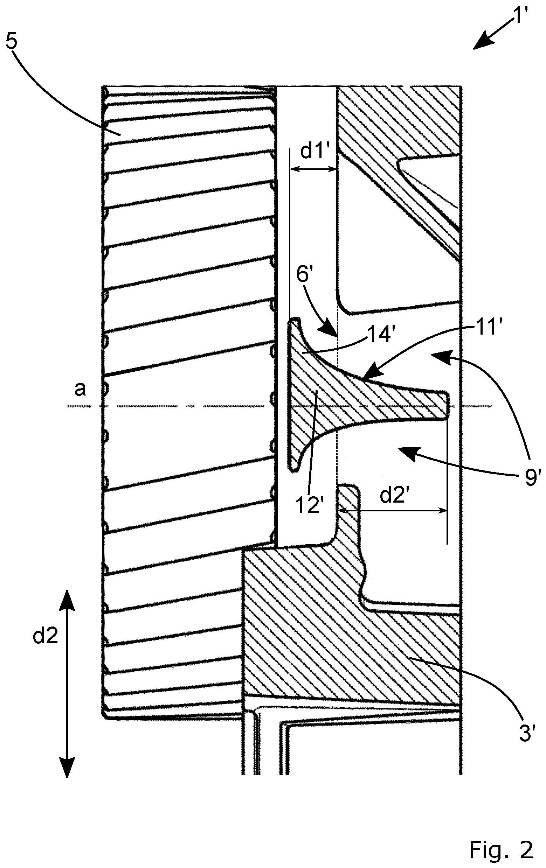

**Fig. 2** schematically illustrates a cross section of a power take-off (PTO) 1' according to some further embodiments.

The principle of functioning of the PTO 1' illustrated in Fig. 2 is similar to the principle of functioning of the PTO 1 illustrated in Fig. 1. The PTO 1' has the same technical features and advantages as the corresponding features of the PTO 1 described above. Consequently, these technical features and advantages are not repeated or explained anew in order to avoid unnecessary repetition.

The PTO 1' comprises a housing 3' comprising at least one oil guiding element 11' arranged inside the housing 3' at at least one oil outlet 9' for guiding the oil transported towards the at least one oil outlet 9' into the at least one oil outlet 9' for removing the oil from the housing 3'.

In Fig. 2 only a part of the housing 3' is illustrated in a schematical manner. Thus, in Fig. 2 only a portion of PTO 1' is illustrated to clarify the function of the present invention.

According to the embodiments illustrated in Fig. 2, the oil guiding element 11' is arranged axially in relation to the gear wheel 5 and particularly in relation to the rotational axis a of the gear wheel 5. The design of the housing 3'may be different to the design of the housing 3 described in Fig. 1, however the function of the oil guiding element 11' illustrated in Fig. 2 is similar to the function of the oil guiding element 11 described in Fig. 1 and is therefore not repeated. Thus, similar parts of the PTO 1' to the parts of the PTO 1 illustrated and described in Fig. 1 are not explained anew in order to avoid unnecessary repetition.

**Fig. 3** schematically illustrates a vehicle 4 comprising a PTO 1, 1' according to some embodiments. According to the illustrated embodiments, the vehicle 4 is a truck, i.e., a type of heavy vehicle. According to further embodiments, the vehicle 4, as referred to herein, may be another type of heavy or lighter type of manned or unmanned vehicle for land or water-based propulsion such as a lorry, a bus, a construction vehicle, a tractor, a car, a ship, a boat, or the like.

As illustrated in Fig. 3 the vehicle 4 has a longitudinal direction dl. For the vehicle 4 positioned in an intended position for use on a support surface the longitudinal direction dl is parallel with the support surface. For the vehicle 4 positioned in an intended position for use on a horizontal plane the longitudinal direction dl is horizontal. Further, the vehicle 4 has a vertical direction dv perpendicular to the longitudinal direction dl. For the vehicle positioned in an intended position for use on a horizontal plane, the vertical direction dv coincides with a gravity vector at the location of the vehicle 4.

The example embodiments of the PTO 1, 1' illustrated in Fig. 1 and Fig. 2 are illustrated in a position corresponding to a placement in the vehicle 4 positioned in an intended position for use on a horizontal plane where the vertical direction dv coincides with a gravity vector at the location of the vehicle 4. This position may be advantageous regarding forces acting on the oil inside the housing during use of the PTO 1, 1', i.a. regarding to gravity.

## Claims

1. A power take-off (1, 1') of a powertrain (2) of a vehicle (4), the power take-off (1) comprises a housing (3, 3') and a number of gear wheels (5) rotatably arranged inside the housing (3, 3'),
wherein the housing (3, 3') comprises a main oil inlet (7) arranged for providing oil into the housing (3, 3') for cooling and lubrication of said number of gear wheels (5), and at least one oil outlet (9, 9') having an inlet (6, 6') and being configured for removing the oil from the housing (3, 3'), wherein the oil is transported towards the at least one oil outlet (9, 9') by at least one gear wheel (5) of the number of gear wheels (5) during rotation of the number of gear wheels (5),
wherein the housing (3, 3') comprises:
at least one oil guiding element (11, 11') arranged inside the housing (3, 3') at the at least one oil outlet (9, 9'), **characterized in that** the at least one oil guiding element (11, 11') comprises a second portion (13, 13') extending inside the at least one oil outlet (9, 9') a second distance (d2, d2') from said inlet (6, 6') for guiding the oil transported towards said at least one oil outlet (9, 9') into the at least one oil outlet (9, 9') for removing the oil from the housing (3, 3').

2. The power take-off (1, 1') according to claim 1, wherein the at least one oil guiding element (11, 11') comprises a first portion (12, 12') extending inside the housing (3) a first distance (d1, d1') from said inlet (6, 6').

3. The power take-off (1, 1') according to claim 2, wherein the at least one oil guiding element (11, 11') comprises a third portion (14, 14') extending from the first portion (12, 12') and being configured to guide the oil towards the first portion (12, 12') of the oil guiding element (11, 11').

4. The PTO (1, 1') according to claim 3 wherein the third portion (14, 14') is arranged as a mirrored portion in relation to a plane (p) extending through the oil guiding element (11, 11').

5. The power take-off (1, 1') according to claim 3 or 4, wherein the third portion (14, 14') has a concave outer surface facing the at least one oil outlet (9, 9').

6. The power take-off (1, 1') according to any of the preceding claims, wherein the at least one oil outlet (9, 9') has a center and the at least one oil guiding element (11, 11') is arranged at the center of the least one oil outlet (9, 9').

7. The power take-off (1, 1') according to any of the preceding claims, wherein the at least one oil guiding element (11, 11') is configured as a one-piece element.

8. The power take-off (1, 1') according to any of the preceding claims, wherein the at least one oil guiding element (11, 11') is arranged to guide the oil into the at least one oil outlet (9, 9') at both rotational directions of the number of gear wheels (5).

9. The power take-off (1, 1') according to any of claims 2 to 8, wherein the at least one oil guiding element (11, 11') is arranged at one gear wheel (5) of the number of gear wheels (5) such that the first distance (d1) is shorter than a gear wheel distance (gd) measured between the inlet (6) and an outermost tip of a tooth of the gear wheel (5).

10. The power take-off (1, 1') according to any of the preceding claims, wherein the at least one oil guiding element (11, 11') is arranged in relation to the at least one oil outlet (9, 9') and one gear wheel (5) of the number of gear wheels (5) such that there is a virtual straight line through a center of the gear wheel (5) and the at least one oil guiding element (11) and the center of the at least one oil outlet (9).

11. A powertrain (2) of a vehicle (4) comprising a power take-off (1, 1') according to any of claims 1 to 10.

12. A vehicle (4) comprising a powertrain (2) according to claim 11.

## Patentansprüche

1. Zapfwelle (1, 1') eines Antriebsstrangs (2) eines Fahrzeugs (4), wobei die Zapfwelle (1) ein Gehäuse (3, 3') und mehrere in dem Gehäuse (3, 3') drehbar angeordnete Zahnräder (5) umfasst,
wobei das Gehäuse (3, 3') einen Hauptöleinlass (7), der dazu ausgebildet ist, Öl in das Gehäuse (3, 3') zu leiten, um die mehreren Zahnräder (5) zu kühlen und zu schmieren, und wenigstens einen Ölauslass (9, 9') mit einem Einlass (6, 6') umfasst, der zum Abführen des Öls aus dem Gehäuse (3, 3') eingerichtet ist, wobei das Öl durch wenigstens ein Zahnrad (5) der mehreren Zahnräder (5) während der Drehung der mehreren Zahnräder (5) zu dem wenigstens einen Ölauslass (9, 9') befördert wird,
wobei das Gehäuse (3, 3') umfasst:
wenigstens ein Ölführungselement (11, 11'), das in dem Gehäuse (3, 3') an dem wenigstens einen Ölauslass (9, 9') angeordnet ist, **dadurch gekennzeichnet, dass** das wenigstens eine Ölführungselement (11, 11') einen zweiten Abschnitt (13, 13') umfasst, der sich innerhalb des wenigstens einen Ölauslasses (9, 9') um einen zweiten Abstand (d2, d2') von dem Einlass (6, 6') erstreckt, um das zu dem wenigstens einen Ölauslass (9, 9') beförderte Öl in den wenigstens einen Ölauslass (9, 9') zu leiten, um das Öl aus dem Gehäuse (3, 3') abzuführen.

2. Zapfwelle (1, 1') nach Anspruch 1, wobei das wenigstens eine Ölführungselement (11, 11') einen ersten Abschnitt (12, 12') umfasst, der sich innerhalb des Gehäuses (3) um einen ersten Abstand (d1, d1') von dem Einlass (6, 6') erstreckt.

3. Zapfwelle (1, 1') nach Anspruch 2, wobei das wenigstens eine Ölführungselement (11, 11') einen dritten Abschnitt (14, 14') umfasst, der sich von dem ersten Abschnitt (12, 12') erstreckt und dazu eingerichtet ist, das Öl zu dem ersten Abschnitt (12, 12') des Ölführungselements (11, 11') zu leiten.

4. Zapfwelle (1, 1') nach Anspruch 3, wobei der dritte Abschnitt (14, 14') als gespiegelter Abschnitt relativ zu einer Ebene (p) ausgebildet ist, die sich durch das Ölführungselement (11, 11') erstreckt.

5. Zapfwelle (1, 1') nach Anspruch 3 oder 4, wobei der dritte Abschnitt (14, 14') eine konkave Außenfläche aufweist, die zu dem wenigstens einen Ölauslass (9, 9') weist.

6. Zapfwelle (1, 1') nach einem der vorangehenden Ansprüche, wobei der wenigstens eine Ölauslass (9, 9') einen Mittelpunkt aufweist und das wenigstens eine Ölführungselement (11, 11') in dem Mittelpunkt des wenigstens einen Ölauslasses (9, 9') angeordnet ist.

7. Zapfwelle (1, 1') nach einem der vorangehenden Ansprüche, wobei das wenigstens eine Ölführungselement (11, 11') als einstückiges Element ausgebildet ist.

8. Zapfwelle (1, 1') nach einem der vorangehenden Ansprüche, wobei das wenigstens eine Ölführungselement (11, 11') dazu ausgebildet ist, das Öl in beiden Drehrichtungen der mehreren Zahnräder (5) in den wenigstens einen Ölauslass (9, 9') zu leiten.

9. Zapfwelle (1, 1') nach einem der Ansprüche 2 bis 8, wobei das wenigstens eine Ölführungselement (11, 11') an einem Zahnrad (5) der mehreren Zahnräder (5) derart angeordnet ist, dass der erste Abstand (d1) kleiner ist als der Zahnradabstand (gd), der zwischen dem Einlass (6) und einer äußersten Spitze eines Zahns des Zahnrads (5) gemessen wird.

10. Zapfwelle (1, 1') nach einem der vorangehenden Ansprüche, wobei das wenigstens eine Ölführungselement (11, 11') relativ zu dem wenigstens einen Ölauslass (9, 9') und dem einen Zahnrad (5) der mehreren Zahnräder (5) derart angeordnet ist, dass eine virtuelle Gerade durch einen Mittelpunkt des Zahnrads (5) und das wenigstens eine Ölführungselement (11) und den Mittelpunkt des wenigstens einen Ölauslasses (9) verläuft.

11. Antriebsstrang (2) eines Fahrzeugs (4) mit einer Zapfwelle (1, 1') nach einem der Ansprüche 1 bis 10.

12. Fahrzeug (4) mit einem Antriebsstrang (2) nach Anspruch 11.

## Revendications

1. Prise de force (1, 1') d'un groupe motopropulseur (2) d'un véhicule (4), la prise de force (1) comprend un boîtier (3, 3') et un certain nombre de roues d'engrenage (5) agencées de manière rotative à l'intérieur du boîtier (3, 3'),
dans laquelle le boîtier (3, 3') comprend une entrée d'huile principale (7) agencée pour fournir de l'huile dans le boîtier (3, 3') pour le refroidissement et la lubrification dudit nombre de roues d'engrenage (5), et au moins une sortie d'huile (9, 9') ayant une entrée (6, 6') et étant configurée pour retirer l'huile du boîtier (3, 3'), dans laquelle l'huile est transportée vers l'au moins une sortie d'huile (9, 9') par au moins une roue d'engrenage (5) du nombre de roues d'engrenage (5) pendant la rotation du nombre de roues d'engrenage (5),
dans laquelle le boîtier (3, 3') comprend :
au moins un élément de guidage d'huile (11, 11') agencé à l'intérieur du boîtier (3, 3') au niveau de l'au moins une sortie d'huile (9, 9'), **caractérisée en ce que** l'au moins un élément de guidage d'huile (11, 11') comprend une deuxième portion (13, 13') s'étendant à l'intérieur de l'au moins une sortie d'huile (9, 9') à une deuxième distance (d2, d2') de ladite entrée (6, 6') pour guider l'huile transportée vers ladite au moins une sortie d'huile (9, 9') jusque dans l'au moins une sortie d'huile (9, 9') pour retirer l'huile du boîtier (3, 3').

2. Prise de force (1, 1') selon la revendication 1, dans laquelle l'au moins un élément de guidage d'huile (11, 11') comprend une première portion (12, 12') s'étendant à l'intérieur du boîtier (3) à une première distance (d1, d1') de ladite entrée (6, 6').

3. Prise de force (1, 1') selon la revendication 2, dans laquelle l'au moins un élément de guidage d'huile (11, 11') comprend une troisième portion (14, 14') s'étendant à partir de la première portion (12, 12') et étant configurée pour guider l'huile vers la première portion (12, 12') de l'élément de guidage d'huile (11, 11').

4. PTO (1, 1') selon la revendication 3, dans laquelle la troisième portion (14, 14') est agencée comme une portion en miroir par rapport à un plan (p) s'étendant à travers l'élément de guidage d'huile (11, 11').

5. Prise de force (1, 1') selon la revendication 3 ou 4, dans laquelle la troisième portion (14, 14') a une surface extérieure concave faisant face à l'au moins une sortie d'huile (9, 9').

6. Prise de force (1, 1') selon l'une quelconque des revendications précédentes, dans laquelle l'au moins une sortie d'huile (9, 9') présente un centre et l'au moins un élément de guidage d'huile (11, 11') est agencé au centre de l'au moins une sortie d'huile (9, 9').

7. Prise de force (1, 1') selon l'une quelconque des revendications précédentes, dans laquelle l'au moins un élément de guidage d'huile (11, 11') est configuré comme un élément monobloc.

8. Prise de force (1, 1') selon l'une quelconque des revendications précédentes, dans laquelle l'au moins un élément de guidage d'huile (11, 11') est agencé pour guider l'huile jusque dans l'au moins une sortie d'huile (9, 9') dans les deux sens de rotation du nombre de roues d'engrenage (5).

9. Prise de force (1, 1') selon l'une quelconque des revendications 2 à 8, dans laquelle l'au moins un élément de guidage d'huile (11, 11') est agencé au niveau d'une roue d'engrenage (5) du nombre de roues d'engrenage (5) de telle sorte que la première distance (d1) est plus courte qu'une distance de roue d'engrenage (gd) mesurée entre l'entrée (6) et une pointe la plus extérieure d'une dent de la roue d'engrenage (5).

10. Prise de force (1, 1') selon l'une quelconque des revendications précédentes, dans laquelle l'au moins un élément de guidage d'huile (11, 11') est agencé par rapport à l'au moins une sortie d'huile (9, 9') et une roue d'engrenage (5) du nombre de roues d'engrenage (5) de telle sorte qu'il existe une ligne droite virtuelle à travers un centre de la roue d'engrenage (5) et l'au moins un élément de guidage d'huile (11) et le centre de l'au moins une sortie d'huile (9).

11. Groupe motopropulseur (2) d'un véhicule (4) comprenant une prise de force (1, 1') selon l'une quelconque des revendications 1 à 10.

12. Véhicule (4) comprenant un groupe motopropulseur (2) selon la revendication 11.
